Europäisches Patentamt

European Patent Office

Office européen des brevets

(19)

(11) Numéro de publication **0 159 246**
**A1**

(12) **DEMANDE DE BREVET EUROPEEN**

(21) Numéro de dépôt: **85400581.6**

(22) Date de dépôt: **26.03.85**

(51) Int. Cl.⁴: **C 02 F 9/00**
C 02 F 1/44, C 02 F 3/34
A 23 J 1/16

(30) Priorité: **11.04.84 FR 8405741**

(43) Date de publication de la demande:
**23.10.85 Bulletin 85/43**

(84) Etats contractants désignés:
**AT BE CH DE GB LI NL**

(71) Demandeur: **Christ, Charles**
**65, rue de Paris**
**F-72160 Connerre(FR)**

(72) Inventeur: **Christ, Charles**
**65, rue de Paris**
**F-72160 Connerre(FR)**

(74) Mandataire: **Hirsch, Marc-Roger**
**34 rue de Bassano**
**F-75008 Paris(FR)**

(54) **Perfectionnement aux procédés et installations de traitement des eaux résiduaires provenant de la fabrication de choucroute.**

(57) Ce procédé comporte outre une étape de traitement biologique [3] des eaux résiduaires [2] conduisant à la formation d'un précipite [6], le traitement de lá phase aqueuse séparée [8] dans un appareillage d'osmose inverse [9].

EP 0 159 246 A1

## PERFECTIONNEMENT AUX PROCEDES ET INSTALLATIONS DE TRAITEMENT
## DES EAUX RESIDUAIRES PROVENANT DE LA FABRICATION DE CHOUCROUTE

La présente invention a pour objet un perfectionnement aux procédés de traitement des eaux résiduaires provenant de la fabrication de choucroute ainsi qu'aux installations convenant à cette fin.

On sait que les eaux résiduaires des installations de fabrication de choucroute ont diverses origines:

- eaux de lavage et de blanchiment de la choucroute,

- jus de fermentation (début et fin) de la choucroute, et que leur purification entraine de nombreux problémes.

On sait en outre qu'il est possible de purifier ces eaux résiduaires par un traitement biologique impliquant un ensemencement à l'aide d'un inoculum consistant en Candida Crusei et Candida utilis. De tels procédés et installations sont décrits dans le brevet français 77 24 342 ainsi que dans le certificat d'addition 81 09 202.

Les eaux résiduaires ainsi traitées conduisent à l'obtention d'un précipité susceptible, après séparation, d'être employé comme aliment protéinique. L'effluent liquide purifié, séparé du précipité ainsi formé, présente des qualités rendant possible son traitement dans les bassins de traitement des eaux usées installés par les municipalités. Il serait cependant d'un intérêt majeur de disposer d'un procédé permettant la purification totale des eaux résiduaires provenant de la fabrication de choucroute et d'obtenir directement un effluent totalement purifié; il serait ainssi possible de réduire les frais de traitement des eaux résiduaires.

La présente invention se propose de pallier aux inconvénients des procédés connus et d'obtenir un effluent liquide, résultant du traitement des eaux résiduaires, présentant un taux de pureté suffisamment élevé pour que ces effluents puissent être directement rejetés dans les eaux des riviéres.

Le procédé selon la présente invention de traitement des eaux résiduaires provenant de la fabrication de choucroute consiste à soumettre lesdites eaux résiduaires à un traitement comprenant les étapes:

- de traitement biologique, dans des conditions aérobies résultant de l'injection d'un agent d'oxygénation, par action d'un inoculum de Candida Crusei et/ou Candida utilis, à une température de 30 à 40°C;

- de séparation du précipité formé et de la fraction liquide surnageante;

- d'osmose inverse de la fraction liquide résultant de la séparation précitée à l'aide de membranes dont le seuil de coupure est inférieur à 100 Å, le culot qui forme environ 10% de la fraction liquide, restant en amont de la membrane, étant partiellement retourné à l'étape de traitement biologique.

Selon une forme d'exécution de l'invention, le précipité séparé de la fraction liquide surnageante est, après séchage, récupéré comme levure protéinique ou complément alimentaire.

L'invention a encore pour objet une installation pour la mise en oeuvre de ce procédé.

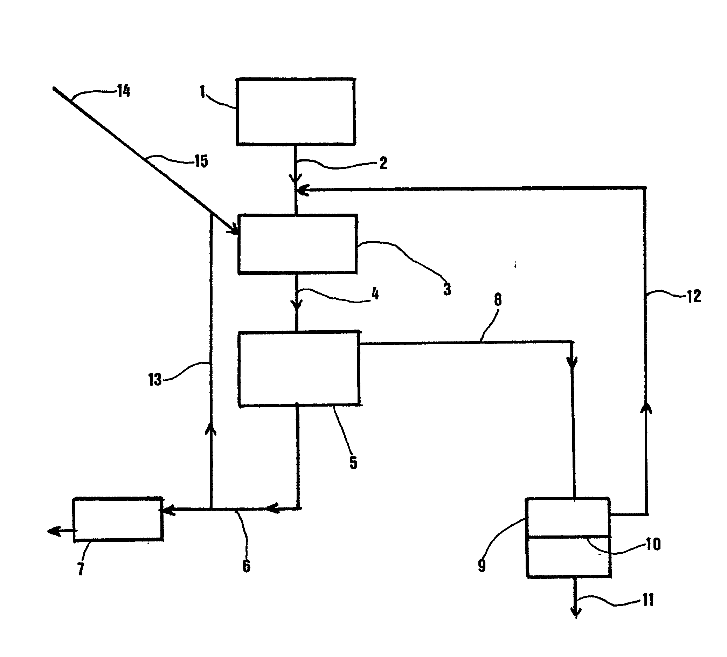

D'autres buts et avantages de l'invention apparaitront à la lecture de la description suivante et de la figure donnée à titre non limitatif, cette figure représentant une installation pour la mise en oeuvre de l'invention.

On a représenté en 1 une installation de fabrication de choucroute dont s'échappe par la conduite 2 les eaux résiduaires. Ces eaux sont amenées dans le fermenteur 3 où se produit le traitement biologique grâce à un ensemencement par un inoculum dont sera indiqué ci-dessous l'origine. La masse ayant subi ce traitement biologique est amené par une conduite 4 dans la zone de séparation 5 dans laquelle est séparée d'une part par la conduite 6 un précipité qui subit dans la zone 7 un traitement de séchage permettant la récupération d'un aliment protéinique, d'autre part une fraction liquide surnageante contenant 10 à 15 % d'impuretés, qui est recueillie dans la zone de séparation 5 et est amenée par la conduite 8 dans une zone d'osmose inverse 9 comprenant une membrane 10.

On retire en 11 l'effluent liquide purifié consistant en eau dont la pureté est supérieure à 99 %.

3    0159246

Par la conduite 12 est retirée le culot, non soumis à osmose, formé en amont de la membrane 10 et ce culot, correspondant à approximativement 10% de la fraction liquide amenée par la conduite 8, est retourné  dans la conduite 2 pour être à nouveau soumis  au traitement biologique dans le fermenteur 3.

L'ensemencement dans le fermenteur 3 résulte d'un inoculum frais amené par la conduite 14 dans la conduite 15 débouchant dans le fermenteur. Il peut également résulter du retour par la conduite 13 et la conduite 15 d'une partie du précipité recueilli dans la conduite 6.

Bien entendu, l'invention n'est pas limitée au mode de réalisation décrit et représenté; elle est susceptible de nombreuses variantes, accessibles à l'homme de l'art sans que l'on ne s'écarte de l'esprit de l'invention.

1

0159246

REVENDICATIONS

1.- Procédé de traitement des eaux résiduaires provenant de la fabrication de choucroute, caractérisé en ce qu'il consiste à soumettre lesdites eaux résiduaires à un traitement comprenant les étapes :

- de traitement biologique des eaux résiduaires, dans des conditions aérobies résultant de l'injection d'un agent d'oxygénation, par action d'un inoculum de Candida Crusei ou de Candida Utilis, à une température de 30 à 40°C;
- de séparation du précipité formé et de la fraction liquide surnageante;
- d'osmose inverse de la fraction liquide résultant de la séparation précitée à l'aide de membranes dont le seuil de coupure est inférieur à 100 $\overset{o}{A}$, le culot formant environ 10% de la fraction liquide, restant en amont de la membrane, étant recyclé dans l'étape de traitement biologique.

2.- Procédé selon la revendication 1, caractérisé en ce que le précipité séparé de la fraction liquide surnageante est, après séchage, récupéré comme levure protéinique en complément alimentaire.

3.- Installation pour la mise en oeuvre du procédé selon la revendication 1, caractérisée en ce qu'elle comprend successivement:
- un fermentateur 3
- une zone de séparation 5
- une zone d'osmose inverse 9 comprenant une membrane 10,
- une conduite 11 de récupération de l'effluent épuré,
- une conduite 12 de retour réunissant la partie de la zone d'osmose inverse située en amont de la membrane 10 au fermenteur.

0159246

**0159246**

Office européen
des brevets

**RAPPORT DE RECHERCHE EUROPEENNE**

Numero de la demande

EP 85 40 0581

## DOCUMENTS CONSIDERES COMME PERTINENTS

| Catégorie | Citation du document avec indication en cas de besoin des parties pertinentes | Revendication concernee | CLASSEMENT DE LA DE MANDE (Int Cl 4) |
|---|---|---|---|
| D,Y | FR-A-2 356 604 (C. CHRIST) <br> * En entier * | 1-3 | C 02 F 9/00 <br> C 02 F 1/44 <br> C 02 F 3/34 <br> A 23 J 1/16 |
| Y | EP-A-0 104 648 (PHILLIPS PETR. COMP.) <br> * Figure 1; abrégé; revendications 1,8; page 3, ligne 29 - page 4, ligne 25 * | 1-3 | |
| A | WATER RESEARCH, vol. 11, no. 4, 1977, pages 379-385, Pergamon Press, Oxford, GB; R. WECHSLER: "Reverse osmosis on secondary sewage effluent: The effect of recovery" <br> * page 379, colonne 2, ligne 30 - page 380, colonne 1, dernière ligne; figures 1,2 * | 1,3 | |

DOMAINES TECHNIQUES
RECHERCHES (Int Cl 4)

B 01 D
C 02 F

Le présent rapport de recherche a été établi pour toutes les revendications

| Lieu de la recherche | Date d'achèvement de la recherche | Examinateur |
|---|---|---|
| LA HAYE | 17-05-1985 | HOORNAERT P.G.R.J. |